# DEMANDE DE BREVET EUROPEEN

(11) **EP 1 500 830 A1**
(43) Date de publication de la demande: **26.01.2005**
(21) Numéro de dépôt: 04290674.3
(22) Date de dépôt: 11.03.2004
(51) Int. Cl.: F16C 1/02, F16C 1/06, F16C 1/26, B60N 2/02

(54) **Dispositif de transmission d'un mouvement de rotation au moyen d'un arbre flexible lissé par rectification**

(30) Priorité: 11.03.2003 FR 0303034
(71) Demandeur: Inderflex - Technoflex, 77820 Le Chatelet en Brie (FR)
(72) Inventeur: Tores, Denis, 77350 Vaux le Penil (FR)
(74) Mandataire: Geismar, Thierry

(57) **Abrégé**

L'invention concerne un dispositif de transmission d'un mouvement de rotation (1) comprenant un arbre flexible (2) et une gaine (3) à l'intérieur de laquelle l'arbre flexible (2) est logé, ladite gaine étant agencée pour permettre la rotation dudit arbre (2) à l'intérieur de ladite gaine. La surface extérieure de l'arbre flexible (2) est usinée de sorte à présenter un état de surface sensiblement lisse.

L'invention concerne également un système de réglage pour siège de véhicule automobile (7) comprenant un tel dispositif.

## Description

L'invention concerne un dispositif de transmission d'un mouvement de rotation et un système de réglage pour siège de véhicule automobile comprenant un tel dispositif.

On connaît des dispositifs de transmission de rotation qui comprennent un arbre flexible et une gaine à l'intérieure de laquelle est logé en rotation l'arbre flexible. En particulier, l'arbre flexible peut être formé d'un câble métallique.

Dans ces dispositifs de transmission, notamment pour le réglage de siège pour véhicule automobile, les vitesses de rotation de l'arbre flexible dans la gaine sont supérieures à 2000 tours/minute, classiquement de l'ordre de 3000 tours/minute.

Lors de la rotation à de telles vitesses, il apparaît des vibrations de faible amplitude qui se propagent le long de l'arbre flexible et provoquent du bruit.

En outre, lorsqu'il est prévu une substance lubrifiante à l'intérieur de la gaine, la rotation de l'arbre flexible induit un effet vis d'Archimède qui provoque le déplacement de la substance lubrifiante aux extrémités de la gaine. Il en résulte donc une perte d'efficacité de la lubrification qui est préjudiciable à la fiabilité du dispositif de transmission.

L'invention vise à palier ces inconvénients en proposant un dispositif de transmission d'un mouvement de rotation dont l'arbre flexible présente une surface sensiblement lisse. En effet, la demanderesse a constaté que cette caractéristique permettait d'une part de réduire de façon importante les vibrations occasionnées par la rotation de l'arbre flexible et d'autre part de supprimer l'effet vis d'Archimède.

A cet effet et selon un premier aspect, l'invention concerne un dispositif de transmission d'un mouvement de rotation comprenant un arbre flexible et une gaine à l'intérieur de laquelle l'arbre flexible est logé, ladite gaine étant agencée pour permettre la rotation dudit arbre à l'intérieur de ladite gaine. La surface extérieure de l'arbre flexible est usinée de sorte à présenter un état de surface sensiblement lisse.

Selon un deuxième aspect, l'invention concerne un système de réglage pour siège de véhicule automobile, comprenant au moins une glissière de réglage montée sur la structure du véhicule et des moyens réglables de fixation du siège sur ladite glissière, ledit système comprenant en outre un moteur d'entraînement disposant d'au moins une sortie tournante, ledit système de réglage comprenant en outre un tel dispositif de transmission, qui est disposé entre la sortie dudit moteur d'entraînement et lesdits moyens de fixation, de sorte à déplacer lesdits moyens de fixation le long de ladite glissière de réglage en réponse à une rotation de ladite sortie.

L'invention sera bien comprise à la lecture de la description qui suit, faite en référence aux figures annexées.

La figure 1 est une vue schématique partielle en coupe longitudinale d'un dispositif de transmission de rotation, selon un premier mode de réalisation.

La figure 2 est une vue schématique partielle en coupe longitudinale d'un dispositif de transmission de rotation, selon un deuxième mode de réalisation.

La figure 3 est une vue schématique en perspective d'un système de réglage pour le siège de véhicule automobile selon l'invention.

Un dispositif de transmission d'un mouvement de rotation 1 comprend un arbre flexible 2 et une gaine 3. L'arbre flexible 2 est logé dans la gaine 3 dont le diamètre intérieur est prévu pour permettre la rotation de l'arbre flexible 2 dans la gaine 3.

Les vitesses de rotation de l'arbre flexible 2 sont classiquement d'environ 3000 tours/minute. Pour permettre une rotation à cette vitesse, on peut prévoir une substance lubrifiante 15 à l'intérieur de la gaine 3 de sorte à faciliter la rotation de l'arbre flexible 2 à l'intérieur de celle-ci.

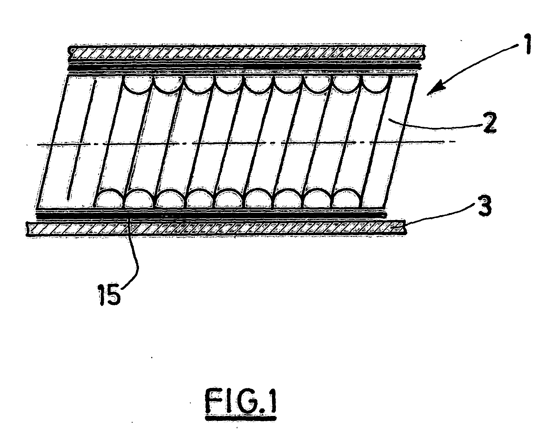

Selon un premier mode de réalisation représenté sur la figure 1, la gaine 2 est formée d'une enveloppe tubulaire flexible, par exemple en matière plastique.

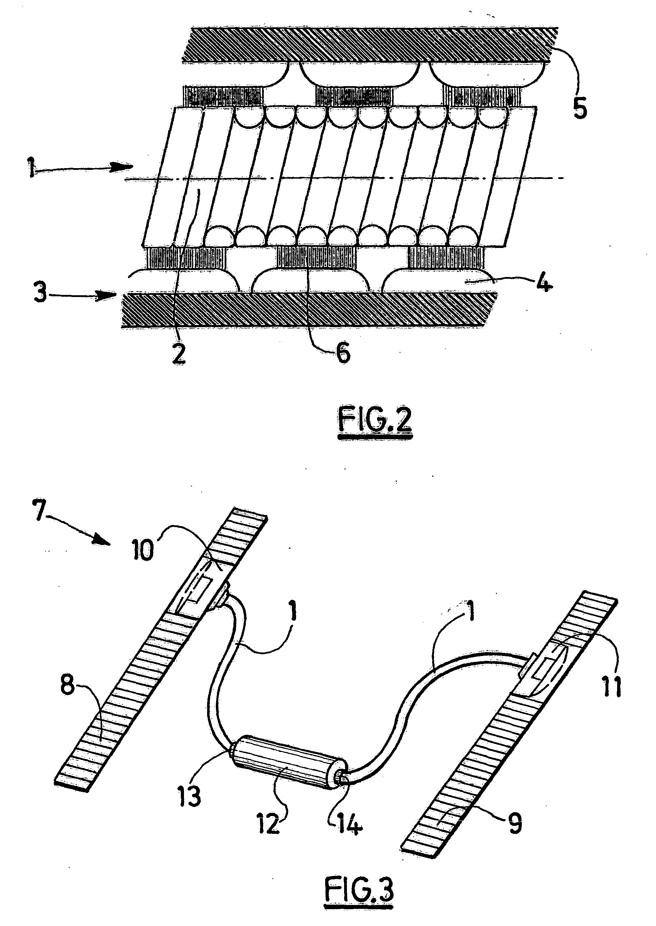

Selon un deuxième mode de réalisation représenté sur la figure 2, la gaine 3 comprend une âme 4 et une enveloppe tubulaire extérieure 5 enrobant l'âme 4. L'âme 4 peut par exemple être formée d'un ressort hélicoïdal en matériau métallique. Ce ressort est par exemple formé à partir d'une bande métallique enroulée en hélice. Les spires du ressort sont non-jointives ce qui confère une flexibilité à la gaine 3. L'enveloppe extérieure 5 peut être réalisée en une matière plastique extrudée, par exemple en PVC.

Selon ce mode de réalisation, l'âme 4 de la gaine 3 comprend un flocage 6 sur sa surface intérieure, c'est à dire sur la surface en regard de l'arbre flexible 2.

Pour ce faire, la surface intérieure de l'âme 4 est revêtue par tout procédé connu, par exemple par voie électrostatique, d'un flocage 6 qui peut comprendre des fibres polyamides 6.6.

En effet, on a pu observer qu'un tel agencement dans lequel la gaine 3 est floquée intérieurement présentait un amortissement sonore optimal. Le flocage 6, en venant en appui sur l'arbre flexible 2, exerce un effort de compression sur ledit arbre flexible, ce qui permet d'assurer un isolement mécanique entre l'arbre flexible 2 et la gaine 3.

De plus, lorsqu'une substance lubrifiante, telle que de la graisse, est insérée à l'intérieur de la gaine afin de lubrifier l'arbre flexible, la gaine floquée permet d'éviter les fuites de graisse qui est déplacée par la rotation de l'arbre flexible, le flocage permettant de retenir la graisse. En effet, dans le cas d'une gaine dont la surface intérieure est lisse, il peut se produire des fuites de graisse au niveau des extrémités de la gaine.

L'arbre flexible 2 est un câble formé d'un enroulement hélicoïdale de plusieurs fils métalliques, notamment en acier. Dans une telle réalisation, la surface extérieure du câble comprend des reliefs qui sont formés du fait de l'utilisation de plusieurs fils.

Pour diminuer la taille de ces reliefs, la surface extérieure du câble est usinée de sorte à présenter un état de surface sensiblement lisse (voir figures).

En particulier, une rectification du câble, préalablement à sa disposition dans la gaine 3 peut être utilisée. Par exemple, la rectification peut être réalisée sur une hauteur de l'ordre de la valeur du rayon d'un fil. Ainsi, en arasant les fils extérieurs sur une distance égale à leur rayon, on obtient un câble dont la surface extérieure est sensiblement lisse, l'état de surface s'apparentant à celle d'un cylindre qui est agencé pour limiter l'usure du flocage 6.

La demanderesse a constaté que l'utilisation d'un arbre flexible 2 selon l'invention permettait de limiter le phénomène de vibration qui est induit par la compression et la détente du flocage 6 lors de la rotation de l'arbre flexible 2 contre le flocage 6.

En outre, l'arbre flexible 2 selon l'invention permet de limiter le phénomène de vis d'Archimède puisque la substance lubrifiante 15 n'est plus entraînée dans la gaine 3 par les reliefs de la surface extérieure de l'arbre flexible 2.

Un tel dispositif de transmission de mouvement de rotation peut être utilisé dans un système de réglage de siège automobile 7 tel que représenté à la figure 3.

A cet effet, deux glissières 8 et 9 sont fixées par tout moyen convenable sur la structure non représentée d'un véhicule automobile. Ces glissières présentent des crans de réglage dont la fonction sera décrite ci-après.

Les glissières 8 et 9 supportent l'armature d'un siège, également non représentée, du véhicule, dont le déplacement et la fixation par rapport aux glissières sont assurés par des réducteurs 10 et 11 respectivement munis de roues dentées coopérant avec les crans précités des glissières 8 et 9.

Un moteur électrique 12 est fixé à la structure du véhicule ou, en variante, à l'armature du siège. Ce moteur 12 possède deux sorties tournantes 13 et 14. Ces sorties 13 et 14 sont reliées par des dispositifs de transmission d'un mouvement de rotation 1 selon l'invention aux réducteurs 10 et 11 respectivement.

Lorsque le moteur 12 est alimenté, il entraîne les arbres flexibles des dispositifs de transmission 1 en rotation à l'intérieur de leurs gaines. Ces arbres flexibles entraînent à leur tour les réducteurs 10 et 11 ce qui a pour effet de déplacer le siège le long des glissières 8 et 9.

## Revendications

1. Dispositif de transmission d'un mouvement de rotation (1) comprenant un arbre flexible (2) et une gaine (3) à l'intérieur de laquelle l'arbre flexible (2) est logé, ladite gaine étant agencée pour permettre la rotation dudit arbre (2) à l'intérieur de ladite gaine, l'arbre flexible (2) étant un câble formé d'un enroulement de plusieurs fils métalliques, ledit dispositif étant **caractérisé en ce que** la surface extérieure de l'arbre flexible (2) est usinée de sorte à présenter un état de surface sensiblement lisse.

2. Dispositif selon la revendication 1, **caractérisé en ce que** l'usinage comprend une étape de rectification de la surface extérieure de l'arbre flexible (2).

3. Dispositif selon la revendication 2, **caractérisé en ce que** les fils sont enroulés de façon hélicoïdale.

4. Dispositif selon l'une quelconque des revendications 1 à 3, **caractérisé en ce que** la rectification est réalisée sur une hauteur de l'ordre de la valeur du rayon d'un fil.

5. Dispositif selon l'une quelconque des revendications 1 à 4, **caractérisé en ce que** la gaine (3) est formée d'une enveloppe tubulaire.

6. Dispositif selon l'une quelconque des revendications 1 à 5, **caractérisé en ce que** la gaine (3) comprend une âme (4) dans laquelle est logé en rotation l'arbre flexible (2), ladite âme étant formée d'un ressort hélicoïdal en matériau métallique, ledit ressort étant formé à partir d'une bande métallique enroulée en hélice non jointive.

7. Dispositif selon la revendication 6, **caractérisé en ce que** la gaine (3) comprend en outre une enveloppe tubulaire extérieure (5) en matière plastique qui enrobe l'âme (4).

8. Dispositif selon la revendication 6 ou 7, **caractérisé en ce que** l'âme (4) est munie sur sa surface intérieure d'un flocage (6).

9. Dispositif selon l'une quelconque des revendications 1 à 8, **caractérisé en ce qu'**une substance lubrifiante (15) est disposée à l'intérieur de la gaine (3).

10. Système de réglage pour siège de véhicule automobile (7), comprenant au moins une glissière de réglage (8, 9) montée sur la structure du véhicule et des moyens réglables (10, 11) de fixation du siège sur ladite glissière (8, 9), ledit système comprenant en outre un moteur d'entraînement (12) disposant d'au moins une sortie tournante (13, 14), ledit système de réglage (7) étant **caractérisé en ce qu'**il comprend en outre un dispositif de transmission (1) selon l'une quelconque des revendications 1 à 9, qui est disposé entre la sortie (13, 14) dudit moteur d'entraînement (12) et lesdits moyens de fixation (10, 11 ), de sorte à déplacer lesdits moyens de fixation (10, 11) le long de ladite glissière de réglage (8, 9) en réponse à une rotation de ladite sortie (13, 14).
